# EUROPÄISCHE PATENTSCHRIFT

(11) **EP 1 713 153 B1**
(45) Veröffentlichungstag und Bekanntmachung des Hinweises auf die Patenterteilung: **25.06.2008**
(21) Anmeldenummer: 05008161.1
(22) Anmeldetag: 14.04.2005
(51) Int. Cl.: H02G 3/02, H02G 3/06, F16L 3/22, B65D 59/00, H01B 7/08

(54) **Leitungsverbund**
Line-coupling
Couplage de ligne

(43) Veröffentlichungstag der Anmeldung: 18.10.2006
(60) Teilanmeldung: 07005232.9
(73) Patentinhaber: ekd gelenkrohr GmbH, 40699 Erkrath (DE)
(72) Erfinder: Klein, Ernst, Dipl.-Ing., 40625 Düsseldorf (DE)
(74) Vertreter: Albrecht, Rainer Harald

(56) Entgegenhaltungen:
- DE-A1- 4 343 229
- DE-U1- 8 203 814
- US-A- 3 160 175
- US-A- 3 420 275
- US-A- 3 654 668
- US-A- 6 061 880

## Beschreibung

Die Erfindung betrifft einen Leitungsverbund aus mindestens zwei parallelen flexiblen Leitungen, die sich im Verbund axial zueinander verschieben können. Der Begriff "Leitungen" umfasst im Rahmen der Erfindung Kabel und Schläuche aller Art. Insbesondere fallen unter den Begriff energieführende Leitungen, z. B. ein- oder mehradrige elektrische Leitungen, Fluidleitungen, Lichtleiterkabel, Koaxialkabel und dergleichen.

Aus DE-U 295 02 257 ist ein gewebter Leitungsverbund bekannt, in dem nebeneinander liegende Leitungen integriert sind. Der bekannte Leitungsverbund ist für eine ortsfeste Verlegung von elektrischen Leitungen bestimmt und weist eine für die Verlegung vorteilhafte hohe Biegewechselverträglichkeit und gute Verformbarkeit auf, da kein kontinuierlicher Materialfluss zwischen den Adern bzw. Leitungen besteht und sich benachbarte Leitungen im Gewebe frei gegeneinander verschieben können. Für Leitungen, die beispielsweise an einem Roboterarm oder einer Maschine einen orts- oder maschinenfesten Anschluss mit einem beweglichen Anschluss verbinden, ist der Leitungsverbund nicht geeignet, denn er weist keine ausreichende Stabilität auf, um die parallel nebeneinander verlegten Leitungen in der gewünschten Ordnung zu halten. Es besteht die Gefahr, dass die parallel verlegten Leitungen sich beim Betrieb unkontrolliert gegeneinander verdrehen.

In US 3 160 175 und US 6 061 880 werden unterschiedliche Befestigungselemente beschrieben, um Leitungen zu fixieren und relativ zueinander im Abstand zu halten. Auch diese Befestigungselemente sind ausschließlich für eine ortsfeste Verlegung von Leitungen bestimmt.

Der Stand der Technik sieht für Leitungen, die an Roboterarmen geführt werden müssen, Energieführungsketten aus mehraxial schwenkbaren Kettengliedern vor. Energieführungsketten, die mehrachsige Bewegungen zulassen, sind in der Fertigung aufwändig und teuer. Häufig erzielt man mit solchen Energieführungsketten auch nicht den gewünschten Effekt, einerseits die Leitungen in bestimmten Bereichen richtungsstabil zu führen und gleichzeitig in anderen Bereichen die hier erforderliche Flexibilität zu gewährleisten. Ferner besteht bei diesen Ketten keine Möglichkeit, nach Ausschöpfung des vorhandenen Kettenquerschnitts zusätzliche Leitungen aufzunehmen

Aus DE-14 49670 ist eine Verwendung eines Leitungsverbundes zur Verbindung eines orts- oder maschinenfesten Anschlusses mit einem beweglichen Maschinenteil bekannt.

Der Erfindung liegt die Aufgabe zugrunde, einen Leitungsverbund aus parallel nebeneinander angeordneten flexiblen Leitungen anzugeben, der bogenförmige Bewegungen um alle drei Raumachsen zulässt, aber eine Verdrehung oder Verdrallung einzelner Leitungen des Verbundes um deren Längsachse sicher verhindert. Der Leitungsverbund soll nahezu beliebigen Bewegungen eines Maschinenteils folgen können und dabei stets eine parallele Ausrichtung der Leitungen gewährleisten. Der Leitungsverbund soll auch nachträglich noch durch zufügen weiterer Leitungen nahezu unbegrenzt erweiterbar sein.

Gegenstand der Erfindung und Lösung der Aufgabe ist die Verwendung eines aus mindestens zwei parallelen flexiblen Leitungen, an denen Verbindungselemente befestigt oder angeformt sind, die den Verbund zwischen den Leitungen herstellen und nur axiale Relativbewegungen zwischen benachbarten Leitungen zulassen, zur Verbindung eines orts- oder maschinenfesten Anschlusses mit einem Maschinenteil wobei die an benachbarten Leitungen angeordneten oder befestigten Verbindungselemente formschlüssig ineinander greifen und in Längsrichtung der Leitungen gegeneinander verschiebbar sind. Die Verbindungselemente können aus Kunststoffkörpern bestehen, die eine mit einer zugeordneten Leitung fest verbindbarer Leitungsdurchführung sowie an den Außenseiten ein Profil zum Anschluss weiterer Verbindungselemente aufweisen. Insbesondere wird der Leitungsverbund verwendet zur Verbindung eines orts- oder maschinenfesten Anschlusses mit einem beweglichen Maschinenteil, welches dreiachsige Bewegungen ausführt. Gegenstand der Erfindung ist auch die Verwendung des Leitungsverbundes zur Parallelführung von Leitungen an einem Roboterarm.

Der erfindungsgemäße direkte Leitungsverbund gleicht einem mehradrigen Flachkabel, bei dem jedoch die einzelnen Adern bzw. Leitungen in Leitungsrichtung jeweils gegeneinander verschiebbar sind. Die Leitungen sind ausschließlich axial zueinander verschiebbar. Durch die an den Leitungen vorgesehenen Verbindungselemente weist der Verbund gleichzeitig eine große Torsionsfestigkeit auf. Für die konstruktive Ausgestaltung ergeben sich eine Vielzahl von Möglichkeiten. So sind Konstruktionsvarianten möglich, bei denen die Verbindungselemente als Teil des Leitungsmantels oder der Schlauchwand ausgeformt sind. Unter die erfindungsgemäße Lehre fallen ferner indirekte Varianten, bei denen die Verbindungselemente als separate Teile etwa als Schrumpfschlauch, Hülse oder Schlauchschelle nachträglich befestigt werden. Unter die erfindungsgemäße Lehre fallen Intervall-Ausführungen, bei denen die Leitungen nur abschnittsweise mit Verbindungselementen versehen sind, ebenso wie Ausgestaltungen, bei denen sich die Verbindungselemente über die gesamte Leitungslänge erstrecken.

Eine mögliche Ausgestaltung der erfindungsgemäßen Lehre sieht vor, dass die Verbindungselemente aus Kunststoffkörpern bestehen, die zwei Leitungsdurchführungen für jeweils eine Leitung aufweisen, wobei eine der Leitungsdurchführungen fest mit der zugeordneten Leitung verbindbar ist und die andere Leitung drehfest und axial beweglich in ihrer zugeordneten Leitungsdurchführung angeordnet ist. Zweckmäßig weisen die Leitungen mindestens eine Längsrille oder eine sich in Längsrichtung erstreckende Wulst auf, die als Verdrehsicherung mit einem Vorsprung bzw. einer Nut in der zugeordneten Leitungsdurchführung zusammenwirkt. Auf den Leitungen können auch Klemmringe befestigt sein, die am Außenumfang ein Profil aus Vor- und Rücksprüngen aufweisen, wobei das Profil der Klemmringe mit einem korrespondierendem Profil in den zugeordneten Leitungsdurchführungen als Verdrehsicherung zusammenwirkt.

Das erfindungsgemäße Funktionsprinzip, dass die an benachbarten Leitungen angeordneten oder befestigten Verbindungselemente formschlüssig ineinander greifen und in Längsrichtung der Leitungen gegeneinander verschiebbar sind, lässt sich auch dadurch realisieren, dass die Verbindungselemente an dem Mantel der Leitungen einteilig angeformt sind. Die Verbindungselemente weisen zweckmäßig ein T-förmiges Anschlussprofil in Form einer T-förmigen Nut und/oder eines korrespondierenden T-förmigen Vorsprungs oder andere Geometrien mit linearer Führungsfunktion auf. Die Verbindungselemente können sich als Strangformerzeugnis über die gesamte Leitungslänge in Längsrichtung der Leitungen erstrecken. Ferner besteht die Möglichkeit, die Verbindungselemente z. B. als Kunststoffspritzgussteile in vorgegebenen Abständen an dem Kunststoffmantel der Leitungen anzubringen.

Die Verbindungselemente können auch an einem biegsamen Schutzschlauch angeformt sein, der einen Aufnahmeraum für energieführende Leitungen bildet. Der Schutzschlauch ist beispielsweise als Wellschlauch ausgebildet, in den eine energieführende Leitung eingezogen werden kann.

Eine weitere Ausführungsform der Erfindung sieht vor, dass die Verbindungselemente an einem Überzugsschlauch angeformt sind, der auf einer energieführenden Leitung fest haftet. Der Überzugschlauch ist als Schrumpfschlauch ausführbar oder besteht aus einer Folie, die mit überlappenden Randbereichen an den Mantel einer energieführenden Leitung angelegt und mittels einer Siegelnaht an den überlappenden Randbereichen schlauchförmig geschlossen wird.

Im Folgenden wird die Erfindung anhand einer lediglich ein Ausführungsbeispiel darstellenden Zeichnung erläutert: Es zeigen schematisch
- Fig. 1: eine Leitungsverbund aus mehreren parallelen Leitungen in einer perspektivischen Darstellung,
- Fig. 2: einen Ausschnitt aus Fig. 1 in einer im Vergleich zur Fig. 1 vergrößerten Darstellung,
- Fig. 3 bis 6: weitere Ausgestaltungen des Leitungsverbundes, jeweils im Querschnitt.
- Fig. 7: einen Leitungsverbund aus mehreren parallelen Leitungen unter Verwendung der in Fig. 6 dargestellten Elemente.

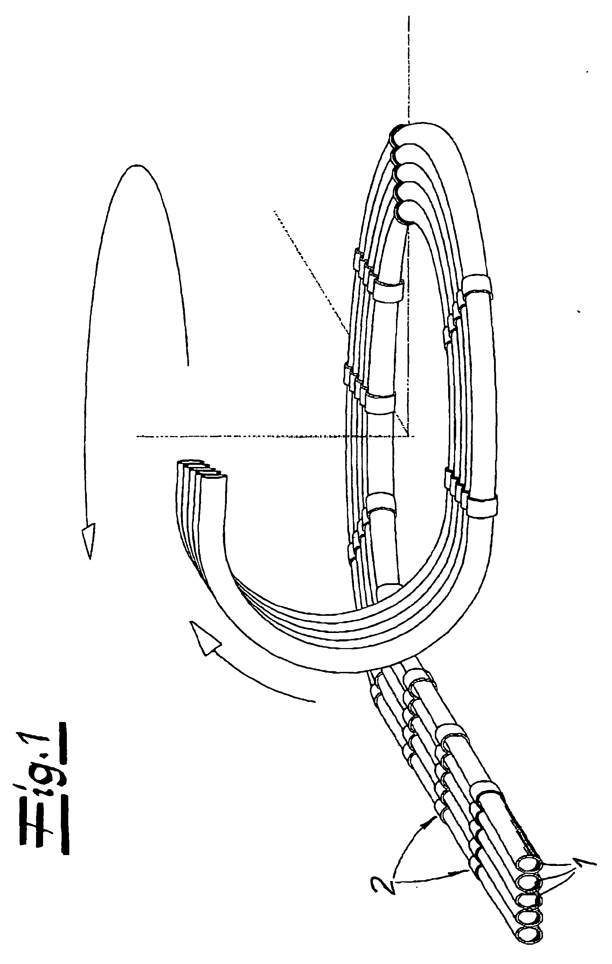

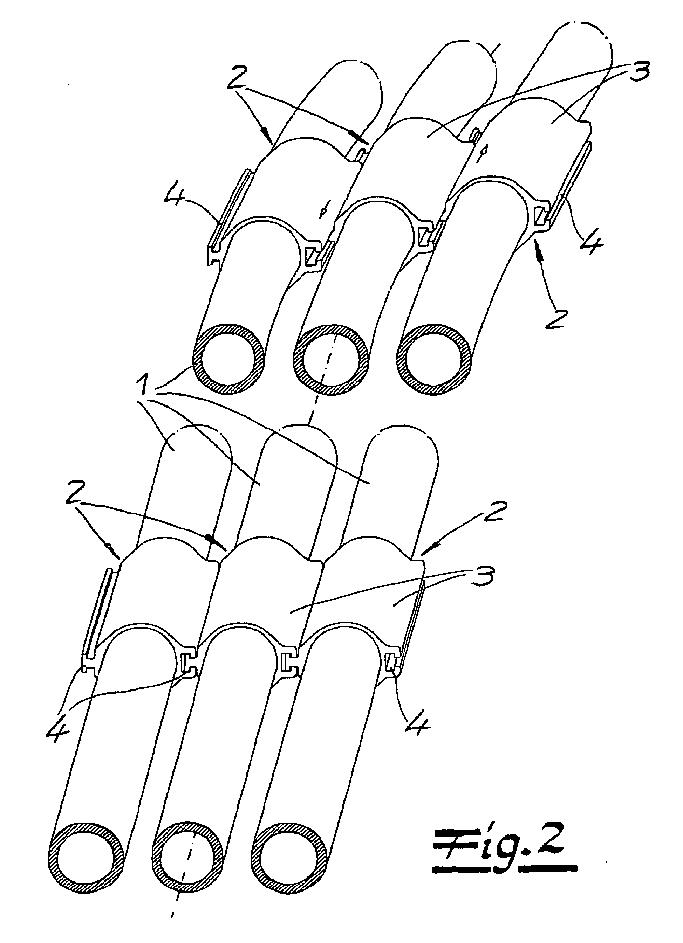

Der in Fig. 1 dargestellte Leitungsverbund weist mehrere parallele flexible Leitungen 1 auf. Unter den Begriff "Leitungen" sollen Kabel und Schläuche aller Art fallen. Unter den Begriff fallen insbesondere energieführende Leitungen, beispielsweise ein- oder mehradrige elektrische Leitungen, Fluidleitungen, Lichtleiterkabel, Koaxialkabel und ähnliches. Die Leitungen 1 können sich im Verbund axial zueinander verschieben. Der Leitungsverbund kann dadurch unter Beibehaltung einer vorgegebenen Richtungsstabilität nahezu beliebige Bewegungen im Raum vollziehen und gewährleistet dabei immer eine geordnete, verdrallfreie Führung der Leitungen. Der Leitungsverbund ist für eine ortsfeste Verlegung von Leitungen geeignet Erfindungsgemäß wird der Leitungsverbund zur Verlegung von Leitungen, die einen orts- oder maschinenfesten Anschluss mit einem beweglichen Maschinenteil verbinden, verwendet. Insbesondere wird der Leitungsverbund erfindungsgemäß auch für die Parallelführung von Leitungen an mehrachsigen Maschinen oder Roboterarmen verwendet. An den Leitungen sind Verbindungselemente 2 befestigt oder angeformt, die den Verbund zwischen den Leitungen 1 herstellen und nur axiale Relativbewegungen zwischen benachbarten Leitungen zulassen. Im Ausführungsbeispiel der Fig. 2 bestehen die Verbindungselemente 2 aus Kunststoffkörpern 3, die eine mit einer zugeordneten Leitung 1 fest verbundene Leitungsdurchführung sowie an den Außenseiten ein Profil 4 zum Anschluss weiterer Verbindungselemente aufweisen. Das Anschlussprofil 4 ist T-förmig als Nut und Feder ausgebildet und erlaubt bei einer Krümmung des Leitungsverbundes eine axiale Verschiebung der Leitungen 1 zueinander.

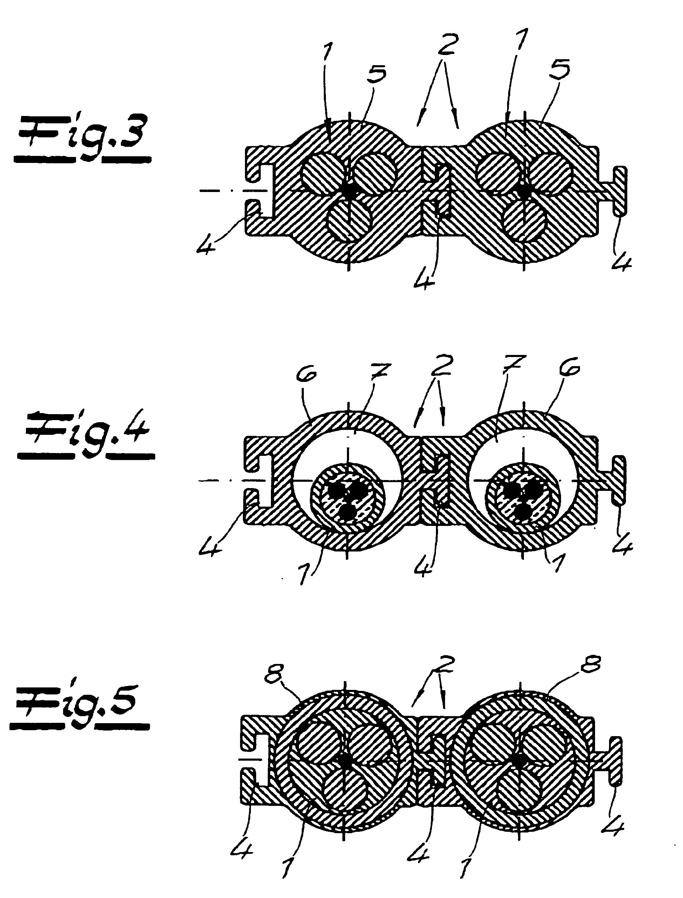

Auch die in den Figuren 3 bis 5 dargestellten Ausführungen beruhen auf dem Prinzip, dass die an benachbarten Leitungen angeordneten oder befestigten Verbindungselemente 2 formschlüssig ineinander greifen und in Längsrichtung der Leitungen 1 gegeneinander verschiebbar sind. In Fig. 3 sind die Verbindungselemente 2 an dem Mantel 5 energieführender Leitungen einteilig angeformt. Im Ausführungsbeispiel der Fig. 4 sind die Verbindungselemente 2 an einem biegsamen Schutzschlauch 6, beispielsweise einem Wellschlauch, angeformt, der einen Aufnahmeraum 7 für eine energieführende Leitung 1 bildet. Gemäß der Ausgestaltung in Fig. 5 sind die Verbindungselemente 2 an einem Überzugsschlauch 8 angeformt, der auf einer energieführenden Leitung 1 fest haftet. Der Überzugsschlauch 8 ist beispielsweise ein Schrumpfschlauch oder besteht aus einer Folie, die mit überlappenden Randbereichen an eine energieführenden Leitung angelegt und mittels einer Siegelnaht an den überlappenden Randbereichen schlauchförmig geschlossen wird. Der Überzugsschlauch 8 kann auch durch Kleben auf der Leitung befestigt werden. Bei allen beschriebenen Ausführungen weisen die Verbindungselemente 2 ein T-förmiges Anschlussprofil 4 in Form einer T-förmigen Nut und/oder eines korrespondierenden T-förmigen Vorsprungs oder andere Geometrien mit linearer Führungsfunktion auf. Die Nut/Federgeometrien lassen axiale Relativbewegungen der Leitungen 1 zueinander zu.

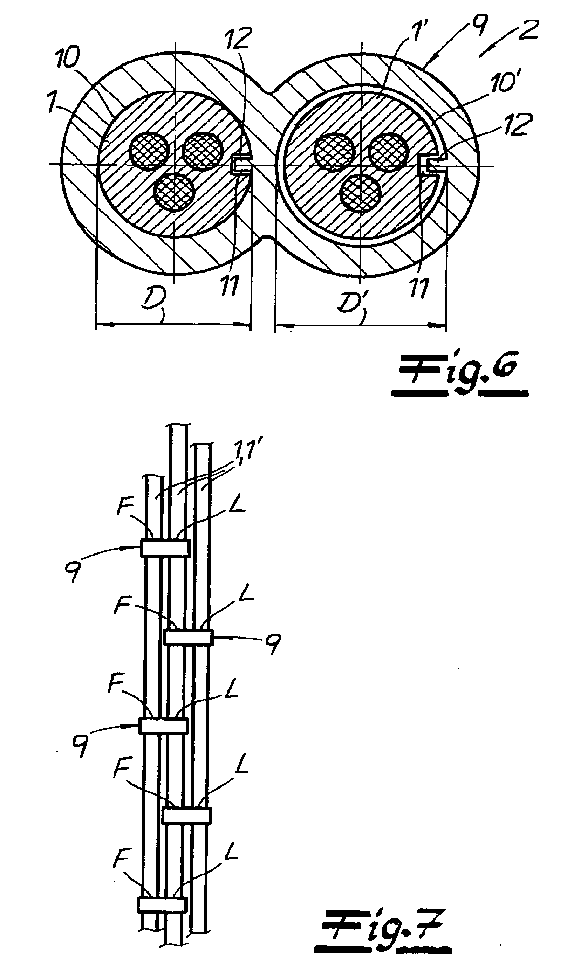

Im Ausführungsbeispiel der Fig. 6 bestehen die Verbindungselemente 2 aus Kunststoffkörpern 9, die zwei Leitungsdurchführungen 10, 10' für jeweils eine Leitung 1, 1' aufweisen. Eine der Leitungsdurchführungen 10 ist fest mit der zugeordneten Leitung 1 verbunden, während die andere Leitung 1' drehfest und axial beweglich in der zugeordneten Leitungsdurchführung 10' angeordnet ist. Die Leitungen 1, 1', beispielsweise ein Elektrokabel oder ein Schlauch für ein Fluid, weisen eine Längsrille 11 oder eine sich in Längsrichtung erstreckende Wulst auf, die als Verdrehsicherung mit einem Vorsprung 12 bzw. einer Nut in der zugeordneten Leitungsdurchführung zusammenwirkt. Im Ausführungsbeispiel ist der Kunststoffkörper 9 als Doppelaufsteckhülse realisiert, die mit unterschiedlichen Innendurchmessern D, D' und einem Vorsprung ausgebildet sind. Die Leitungsdurchführung 10 mit dem kleineren Durchmesser D sitzt fest mit einem Klemmsitz auf der zugeordneten Leitung 1, wobei die Leitung durch den in die Längsrille 11 eingreifenden Vorsprung 12 zusätzlich gegen Verdrehen gesichert ist. In der anderen Leitungsdurchführung 10, 10' die einen größeren Durchmesser D' aufweist, ist die Leitung 1' mit Spiel geführt. Der in die Längsrille 11 der Leitung 1' eingreifende Vorsprung 12 sichert dabei die Leitung 1' gegen Verdrehen.

Mit den in Fig. 6 dargestellten Kunststoffkörpern 9 kann ein Leitungsverbund aus einer Mehrzahl nebeneinander liegender Leitungen 1, 1' gebildet werden. Eine solche Anordnung ist in Fig. 7 dargestellt. Der Darstellung entnimmt man, wie sich feste Verbindungen F und lose Verbindungen L auf einer Leitung 1 in Leitungslängsrichtung abwechseln.

## Patentansprüche

1. Verwendung eines Leitungsverbundes aus mindestens zwei parallelen flexiblen Leitungen (1), an denen Verbindungselemente (2) befestigt oder angeformt sind, die den Verbund zwischen den Leitungen (1) herstellen und nur axiale Relativbewegungen zwischen benachbarten Leitungen zulassen, zur Verbindung eines orts- oder maschinenfesten Anschlusses mit einem beweglichen Maschinenteil, wobei die an benachbarten Leitungen (1) angeformten oder befestigten Verbindungselemente (2) formschlüssig ineinander greifen und in Längsrichtung der Leitungen (1) gegeneinander verschiebbar sind.

2. Verwendung des Leitungsverbundes nach Anspruch 1 zur Verbindung eines orts- oder maschinenfesten Anschlusses mit einem beweglichen Maschinenteil, welches dreiachsigen Bewegungen ausführt.

3. Verwendung des Leitungsverbundes nach Anspruch 1 zur Parallelführung von Leitungen an einem Roboterarm.

4. Verwendung des Leitungsverbundes nach einem der Ansprüche 1 bis 3, **dadurch gekennzeichnet, dass** die Verbindungselemente (2) aus Kunststoffkörpern (3) bestehen, die eine mit einer zugeordneten Leitung (1) fest verbundene Leitungsdurchführung sowie an den Außenseiten ein Profil (4) zum Anschluss weiterer Verbindungselemente (2) aufweisen.

5. Verwendung des Leitungsverbundes nach einem der Ansprüche 1 bis 3, **dadurch gekennzeichnet, dass** die Verbindungselemente (2) an dem Mantel (5) der Leitungen (1) einteilig angeformt sind.

6. Verwendung des Leitungsverbundes nach einem der Ansprüche 1 bis 3, **dadurch gekennzeichnet, dass** die Verbindungselemente (2) an einem biegsamen Schutzschlauch (6) angeformt sind, der einen Aufnahmeraum für eine energieführende Leitung (1) bildet.

7. Verwendung des Leitungsverbundes nach einem der Ansprüche 1 bis 3, **dadurch gekennzeichnet, dass** die Verbindungselemente (2) an einem Überzugsschlauch (8) angeformt sind, der auf einer energieführenden Leitung (1) fest haftet.

8. Verwendung des Leitungsverbundes nach Anspruch 7, **dadurch gekennzeichnet, dass** der Überzugsschlauch (8) ein Schrumpfschlauch ist.

9. Verwendung des Leitungsverbundes nach Anspruch 7, **dadurch gekennzeichnet, dass** der Überzugsschlauch (8) aus einer Folie besteht, die mit überlappenden Randbereichen an einer energieführenden Leitung angelegt und mittels einer Siegelnaht an den überlappenden Randbereichen schlauchförmig geschlossen wird.

10. Verwendung des Leitungsverbundes nach einem der Ansprüche 1 bis 9, **dadurch gekennzeichnet, dass** die Verbindungselemente (2) ein T-förmiges Anschlussprofil (4) in Form einer T-förmigen Nut und/oder eines korrespondierenden T-förmigen Vorsprunges oder anderer Geometrie mit linearer Führungsfunktion aufweist.

## Claims

1. Use of a composite cable of two or more parallel flexible lines (1), to which connecting elements (2) are attached or moulded connecting the lines (1) and only allowing adjacent lines to move axially relative to one another, to connect a static connection or machine fixed connection to a mobile machine component, in which connecting elements (2) moulded onto or connected to adjacent lines (1) engage one another and can be moved against one another in the axial direction of the lines (1).

2. Use of the composite cable as in claim 1 to connect a static connection or machine fixed connection with a mobile machine components moving in three dimensions.

3. Use of the composite cable as in claim 1 to run lines in parallel to a robot arm.

4. Use of the composite cable as in any of claims 1 to 3, **characterised by** the fact that the connecting elements (2) consist of plastic bodies (3) which having a line bushing firmly connected with an assigned line (1) and which plastic bodies (3) have a profile (4) on the outsides for connecting further connecting elements (2).

5. Use of the composite cable as in any of claims 1 to 3, **characterised by** the fact that the connecting elements (2) are moulded integrally onto the sheath (5) of lines (1).

6. Use of the composite cable as in any of claims 1 to 3, **characterised by** the fact that the connecting elements (2) are moulded onto a flexible protective hose (6) which forms a space to take a power line (1).

7. Use of the composite cable as in any of claims 1 to 3, **characterised by** the fact that the connecting elements (2) are moulded onto a coated hose (8) which is permanently attached to a power line (1).

8. Use of the composite cable as in claim 7, **characterised by** the fact that the coated hose (8) is a shrink hose.

9. Use of the composite cable as in claim 7, **characterised by** the fact that the coated hose (8) consists of a film which is laid on a power line with overlapping edge areas and is sealed to make a hose via a weld seam on the overlapping edge areas.

10. Use of the composite cable as in any of claims 1 to 9, **characterised by** the fact that the connecting elements (2) have a T-shaped connecting profile (4) in the form of a T-shaped groove and/or corresponding T-shaped projection or other geometry acting as a linear guide.

## Revendications

1. Utilisation d'un assemblage de conduites comportant au moins deux conduites (1) flexibles parallèles, sur lesquelles sont fixés ou formés des éléments de jonction (2), lesquels établissent l'assemblage entre les conduites (1) et n'autorisent que des déplacements relatifs axiaux entre des conduites voisines, pour la liaison d'un raccordement fixe ou solidaire de la machine avec une partie de machine mobile, les éléments de liaison (2) formés ou fixés sur des conduites (1) voisines s'engageant les uns dans les autres par complémentarité de formes et pouvant coulisser les uns par rapport aux autres dans le sens longitudinal des conduites (1).

2. Utilisation de l'assemblage de conduites selon la revendication 1 pour la liaison d'un raccordement fixe ou solidaire de la machine avec une partie de machine mobile, qui exécute des déplacements sur trois axes.

3. Utilisation de l'assemblage de conduites selon la revendication 1 pour le guidage parallèle de conduites sur un bras de robot.

4. Utilisation de l'assemblage de conduites selon l'une quelconque des revendications 1 à 3, **caractérisée en ce que** les éléments de liaison (2) sont à base de corps plastique (3) qui présentent un passage de conduite relié de façon fixe à une conduite (1) attribuée et sur les côtés extérieurs un profil (4) pour le raccordement d'autres éléments de liaison (2).

5. Utilisation de l'assemblage de conduites selon l'une quelconque des revendications 1 à 3, **caractérisée en ce que** les éléments de liaison (2) sont formés d'un seul tenant sur l'enveloppe (5) des conduites (1).

6. Utilisation de l'assemblage de conduites selon l'une quelconque des revendications 1 à 3, **caractérisée en ce que** les éléments de liaison (2) sont formés sur un tuyau flexible de protection (6) souple, lequel forme un espace de logement pour une conduite (1) véhiculant de l'énergie.

7. Utilisation de l'assemblage de conduites selon l'une quelconque des revendications 1 à 3, **caractérisée en ce que** les éléments de liaison (2) sont formés sur un tuyau flexible de revêtement (8), lequel adhère fermement sur une conduite (1) véhiculant de l'énergie.

8. Utilisation de l'assemblage de conduites selon la revendication 7, **caractérisée en ce que** le tuyau flexible de revêtement (8) est un tuyau flexible thermorétractable.

9. Utilisation de l'assemblage de conduites selon la revendication 7, **caractérisée en ce que** le tuyau flexible de revêtement (8) est constitué d'un film qui est appliqué avec des zones périphériques de chevauchement sur une conduite véhiculant de l'énergie et est fermé en forme de tuyau flexible au moyen d'une ligne de joint de scellement sur les zones périphériques de chevauchement.

10. Utilisation de l'assemblage de conduites selon l'une quelconque des revendications 1 à 9, **caractérisée en ce que** les éléments de liaison (2) présentent un profil de raccordement (4) en T sous la forme d'une rainure en T et/ou d'une partie saillante en T correspondante ou d'une autre géométrie avec la fonction de guidage linéaire.
